# EUROPEAN PATENT APPLICATION

(11) **EP 4 260 738 A1**
(43) Date of publication of application: **18.10.2023**
(21) Application number: 20965110.8
(22) Date of filing: 10.12.2020
(51) Int. Cl.: A24F 40/65

(54) **INFORMATION PROCESSING DEVICE, INFORMATION PROCESSING SYSTEM, INFORMATION PROCESSING TERMINAL, INFORMATION PROCESSING METHOD, AND PROGRAM**

(71) Applicant: Japan Tobacco Inc., Tokyo 105-6927 (JP)
(72) Inventor: FUJINO, Yusuke, Tokyo 130-8603 (JP); OSAWA, Kosuke, Tokyo 130-8603 (JP); HARA, Kenta, Tokyo 130-8603 (JP); SEMA, Hiroaki, Tokyo 130-8603 (JP); SHIMADA, Yurina, Tokyo 130-8603 (JP); KATO, Masato, Tokyo 130-8603 (JP)
(74) Representative: Hoffmann Eitle
(86) International application number: PCT/JP2020/046058
(87) International publication number: WO 2022/123728

(57) **Abstract**

This information processing device is provided with: a storage unit that stores information for setting a plurality of types of suction tools; an acquisition unit that acquires identification information of an suction tool from a user terminal connected to the suction tool in response to activation of the suction tool; a specification unit that specifies information for settings corresponding to the identification information acquired by the acquisition unit; and an output unit that outputs the information for settings specified by the specification unit to the user terminal.

## Description

### FIELD

The present invention relates to an information processing device, an information processing system, an information processing terminal, an information processing method, and a program.

### BACKGROUND

In recent years, a technique for providing an initial setting guide of a product to a user who uses the product for the first time has been developed.

For example, Patent Document 1 discloses providing guide information required by the user who uses the electronic guide in the digital broadcast receiving apparatus with electronic guide functions.

Patent Document 2 discloses providing a liquid crystal display device of a cooking device using a liquid crystal display, which displays initial setting enabling information on a liquid crystal display unit and allows the user to perform initial setting.

### CITATION LIST

### PATENT LITERATURE

Patent Document 1: JP2008-288659A
Patent Document 2: JP2004-222936A

### SUMMARY

### TECHNICAL PROBLEM

Here, in Patent Document 1, the initial setting guide information stored in the product itself is provided to the user. Therefore, in Patent Document 1, the initial setting guide information needs to be stored in advance in the product.

In Patent Document 2, the initial setting enabling information stored in the liquid crystal display device is displayed on the basis of user's selection. Therefore, also in Patent Document 2, the initial setting enabling information needs to be stored in advance in the liquid crystal display device.

An object of the present invention is to provide a technique capable of presenting setting information to a user for a device in which setting information is not stored.

### SOLUTION TO PROBLEM

An information processing device according to an aspect of the present invention includes: a storage unit configured to store information for setting of a plurality of types of inhalers; an acquisition unit configured to acquire identification information of an inhaler from a user terminal connected to the inhaler in response to activation of the inhaler; a specification unit configured to specify information for setting corresponding to the identification information acquired by the acquisition unit; and an output unit configured to output the information for setting specified by the specification unit to the user terminal.

An information processing method according to an aspect of the present invention includes: acquiring identification information of an inhaler from a user terminal connected to the inhaler in response to activation of the inhaler; specifying information for setting corresponding to the acquired identification information based on information for setting of a plurality of types of inhalers stored in a storage unit; and outputting the specified information for setting to the user terminal.

A program according to an aspect of the present invention causes a computer to implement: an acquisition unit configured to acquire identification information of an inhaler from a user terminal connected to the inhaler in response to activation of the inhaler; a specification unit configured to specify information for setting corresponding to the acquired identification information based on information for setting of a plurality of types of inhalers stored in a storage unit; and an output unit configured to output the specified information for setting to the user terminal.

In the present invention, the "unit" or "device" does not simply refer to a physical means, but encompasses a case where functions equipped in the "unit" or "device" are implemented by software. The functions equipped in a single "unit" or "device" may be implemented by two or more physical means or devices, and the functions of two or more "units" or "devices" may be implemented by a single physical means or device.

### ADVANTAGEOUS EFFECTS OF INVENTION

According to the present invention, it is possible to provide a technique capable of presenting setting information to a user for a device in which setting information is not stored.

### BRIEF DESCRIPTION OF THE DRAWINGS

FIG. 1 is a block diagram schematically showing a configuration example of an information processing system according to a first embodiment of the present invention.
FIG. 2 is a schematic diagram schematically showing a first configuration example of an inhaling device according to the first embodiment of the present invention.
FIG. 3 is a schematic diagram schematically showing a second configuration example of the inhaling device according to the first embodiment of the present invention.
FIG. 4 is a block diagram schematically showing a configuration example of an information processing server according to the first embodiment of the present invention.
FIG. 5 is a flowchart showing an example of processing by the information processing server according to the first embodiment of the present invention.
FIG. 6 is a block diagram schematically showing a configuration example of an information processing server according to a second embodiment of the present invention.
FIG. 7 is a block diagram schematically showing a configuration example of a user terminal according to the second embodiment of the present invention.
FIG. 8 is a flowchart showing an example of processing by the information processing server according to the second embodiment of the present invention.
FIG. 9 is a flowchart showing an example of processing by the user terminal according to the second embodiment of the present invention.

### DETAILED DESCRIPTION

### [First Embodiment]

Hereinafter, the first embodiment of the present invention will be described with reference to the accompanying drawings. In the drawings, the same constituent elements will be assigned identical reference symbols where possible, and redundant descriptions will be omitted.

### <<Configuration Example of Information Processing System>>

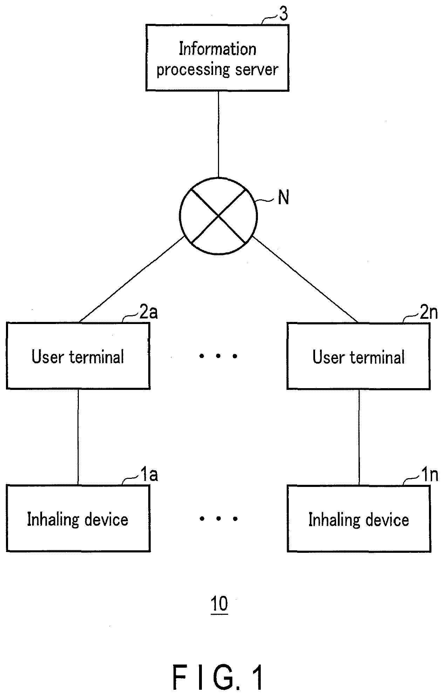

FIG. 1 is a schematic configuration diagram of an information processing system according to the first embodiment of the present invention.

As shown in FIG. 1, an information processing system 10 includes, as an example, n inhaling devices 1a to 1n (where n is a given integral value equal to or greater than 1), n user terminals 2a to 2n (where n is a given integral value equal to or greater than 1) respectively connected to the n inhaling devices 1a to 1n, and an information processing server 3 configured to enable communication with the user terminals 2a to 2n via a network N. In the description that follows, when the n inhaling devices are not distinguished from one another, each one will be simply referred to as an "inhaling device 1", with part of the reference symbol omitted. Similarly, when the n user terminals are not distinguished from one another, each one of them will be simply referred to as a "user terminal 2", with part of the reference symbol omitted. It is assumed that an inhaling device 1 and a user terminal 2 to which the same alphabetical symbol is appended at the end are possessed by an identical user. For example, an inhaling device 1a and a user terminal 2a are possessed by an identical user.

The information processing system 10 is what is known as a "client server system". The information processing system 10 is realized by mutual communications between n user terminals 2, which are clients, and the information processing server 3 via the network N. The network N is realized by, for example, the Internet, a network such as a mobile telephone network, a local area network (LAN), or a network that is a combination thereof.

The inhaling device 1 is an electronic device that produces a substance to be inhaled by a user. The inhaling device 1 corresponds to an inhaler or a flavor inhaler. A configuration example of an inhaling device that may be the inhaling device 1 will be described later.

A user terminal 2 is a portable electronic device equipped with a communication function. For example, the user terminal 2 is a smartphone, a tablet terminal, or the like.

The information processing server 3 is a computer equipped with an information processing function. The information processing server 3 is realized by, for example, one or more (at least one) server devices. A configuration example of the information processing server 3 will be described later. The information processing server 3 is an example of an information processing device.

The inhaling device 1 and the user terminal 2 are associated with each other, and mutual data transmission and reception are enabled by executing short-range wireless communications based on, for example, Bluetooth (registered trademark), Bluetooth Low Energy (BLE), etc. Data transmission and reception between the inhaling device 1 and the user terminal 2 may be executed by any communication technology such as Wi-Fi (registered trademark), a low-power wide-area network (LPWAN), a near-field communication (NFC), or the like, aside from BLE communication technology. Also, data transmission and reception between the inhaling device 1 and the user terminal 2 is not necessarily performed by wireless communications, and may be performed by wired communications using a Universal Serial Bus (USB), a Mini USB, a Micro USB, Lightning, or the like.

### «Configuration Example of Inhaling Device»

An inhaling device is a device that produces a substance to be inhaled by a user. In the description that follows, it is assumed that the substance produced by the inhaling device is an aerosol. In another case, the substance produced by the inhaling device may be a gas.

### (1) First Configuration Example

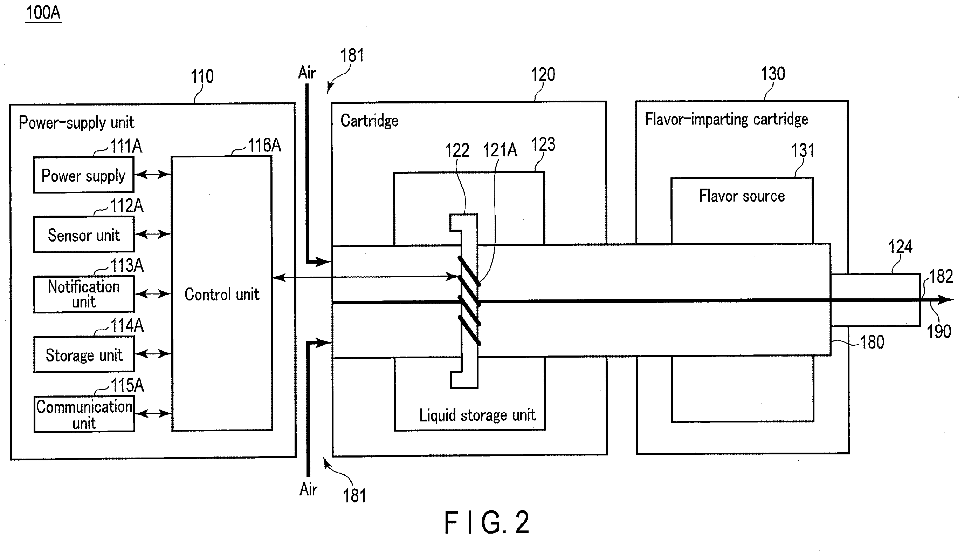

FIG. 2 is a schematic diagram schematically showing the first configuration example of the inhaling device. As shown in FIG. 2, an inhaling device 100A according to the present configuration example includes a power-supply unit 110, a cartridge 120, and a flavor-imparting cartridge 130. The power-supply unit 110 includes a power supply 111A, a sensor unit 112A, a notification unit 113A, a storage unit 114A, a communication unit 115A, and a control unit 116A. The cartridge 120 includes a heating unit 121A, a liquid guide unit 122, and a liquid storage unit 123. The flavor-imparting cartridge 130 includes a flavor source 131 and a mouthpiece 124. In the cartridge 120 and the flavor-imparting cartridge 130, an airflow path 180 is formed.

The power supply 111A accumulates electric power. Based on control by the control unit 116A, the power supply 111A supplies power to each constituent element of the inhaling device 100A. The power supply 111A may be configured of, for example, a chargeable battery such as a lithium-ion secondary battery.

The sensor unit 112A acquires various types of information relating to the inhaling device 100A. As an example, the sensor unit 112A is configured of a pressure sensor such as a microphone capacitor, a flowrate sensor, a temperature sensor, etc., and acquires values involved with user inhalation. As another example, the sensor unit 112A is configured of an input device which receives an information input from the user, such as a button, a switch, etc.

The notification unit 113A notifies the user of the information. The notification unit 113A is configured of, for example, a light-emitting device which emits light, a display device which displays an image, a sound output device which outputs sound, a vibration device which vibrates, etc.

The storage unit 114A stores various types of information for operation of the inhaling device 100A. The storage unit 114A is configured of, for example, a non-volatile storage medium such as a flash memory. The storage unit 114A may store a registration code. Furthermore, the storage unit 114A may store a device ID. The registration code and the device ID will be described later.

The communication unit 115A is a communication interface that enables communications compatible with a given wired or wireless communication standard to be performed. As such a communication standard, Wi-Fi (registered trademark), Bluetooth (registered trademark), etc. may be adopted.

The control unit 116A functions as an arithmetic processor and a controller, and controls the entire operation of the inhaling device 100A in accordance with various programs. The control unit 116A is realized by, for example, electronic circuitry such as a central processing unit (CPU), or a microprocessor.

The liquid storage unit 123 stores an aerosol source. By atomizing the aerosol source, aerosol is produced. The aerosol source is, for example, a polyhydric alcohol such as glycerin and propylene glycol, and a liquid such as water. The aerosol source may contain a tobacco-derived or non-tobacco-derived flavor component. When the inhaling device 100A is a medical aspirator such as a nebulizer, the aerosol source may contain a drug.

The liquid guide unit 122 guides the aerosol source which is a liquid stored in the liquid storage unit 123 from the liquid storage unit 123, and holds the aerosol source. The liquid guide unit 122 is, for example, a wick formed by twisting a fiber material such as glass fiber or a porous material such as a porous ceramic. In this case, the aerosol source stored in the liquid storage unit 123 is guided by the capillary effect of the wick.

The heating unit 121A heats the aerosol source, atomizes the aerosol source and produce aerosol. In the example shown in FIG. 2, the heating unit 121A is configured as a coil, and is wound around the liquid guide unit 122. When the heating unit 121A generates heat, the aerosol source held in the liquid guide unit 122 is heated and atomized, thus producing aerosol. The heating unit 121A generates heat when fed from the power supply 111A. As an example, feeding may be performed when the sensor unit 112A has detected the commencement of inhaling by the user and/or the input of predetermined information. Feeding may be stopped when the sensor unit 112A has detected the termination of inhaling by the user and/or the input of predetermined information.

The flavor source 131 is a constituent element for imparting a flavor component to aerosol. The flavor source 131 may contain a tobacco-derived or non-tobacco-derived flavor component.

The airflow path 180 is a path of air inhaled by the user. The airflow path 180 has a tubular structure including, at one of both ends, an air inflow hole 181, which is an inlet of air flowing to the airflow path 180, or an air outflow hole 182, which is an outlet of air flowing from the airflow path 180. In the middle of the airflow path 180, the liquid guide unit 122 is arranged on an upstream side (the side closer to the air inflow hole 181), and a flavor source 131 is arranged on a downstream side (the side closer to the air outflow hole 182). The air flowing in from the air inflow hole 181 in accordance with user inhalation is mixed with the aerosol produced by the heating unit 121A, and, as shown by an arrow 190, passes through the flavor source 131 and is transported to the air outflow hole 182. When a mixed fluid of the aerosol and air passes through the flavor source 131, a flavor component included in the flavor source 131 is imparted to the aerosol.

The mouthpiece 124 is a member which comes in contact with the user's mouth during inhaling. In the mouthpiece 124, the air outflow hole 182 is arranged. The user can introduce a mixed fluid of the aerosol and air into the oral cavity through inhalation via the mouthpiece 124 put in the user's mouth.

A configuration example of the inhaling device 100A has been described above. As a matter of course, the configuration of the inhaling device 100A is not limited to the above, and various configurations that will be described below as examples may be adopted.

As an example, the inhaling device 100A may not include the flavor-imparting cartridge 130. In this case, the mouthpiece 124 is provided in the cartridge 120.

As another example, the inhaling device 100A may include a plurality of types of aerosol sources. Still other types of aerosol may be produced by a chemical reaction caused by a plurality of types of aerosol produced by a plurality of types of aerosol sources being mixed in the airflow path 180.

Moreover, the means for atomizing the aerosol source are not limited to heating by the heating unit 121A. For example, the aerosol source may be atomized by means such as vibration atomizing or induction heating.

### (2) Second Configuration Example

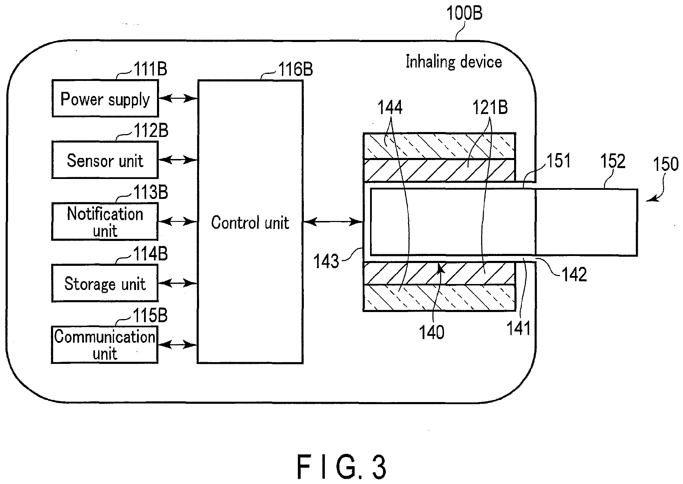

FIG. 3 is a schematic diagram schematically showing the second configuration example of the inhaling device. As shown in FIG. 3, an inhaling device 100B according to the present configuration example includes a power supply 111B, a sensor unit 112B, a notification unit 113B, a storage unit 114B, a communication unit 115B, a control unit 116B, a heating unit 121B, a holding part 140, and a heat-insulating part 144.

The power supply 111B, the sensor unit 112B, the notification unit 113B, the storage unit 114B, the communication unit 115B, and the control unit 116B are substantially identical to the corresponding constituent elements included in the inhaling device 100A according to the first configuration example.

When the power supply 111A and the power supply 111B are described without being distinguished from each other, they are referred to as a power supply 111. Similarly, the sensor unit 112A and the sensor unit 112B are referred to as a sensor unit 112, the notification unit 113A and the notification unit 113B are referred to as a notification unit 113, the storage unit 114A and the storage unit 114B are referred to as a storage unit 114, the communication unit 115A and the communication unit 115B are referred to as a communication unit 115, the control unit 116A and the control unit 116B are referred to as a control unit 116, and the heating unit 121A and the heating unit 121B are referred to as a heating unit 121.

The holding part 140 includes an internal space 141, and holds a stick-shaped base material 150 with part of the stick-shaped base material 150 housed in the internal space 141. The holding part 140 includes an opening 142 which allows the internal space 141 to be communicated to the outside, and holds the stick-shaped base material 150 inserted into the internal space 141 from the opening 142. The holding part 140 is, for example, a tubular body including the opening 142 and a bottom portion 143 as bottom surfaces, and defines a columnar internal space 141. The holding part 140 is also equipped with a function of defining a path of air that is supplied to the stick-shaped base material 150. An air inflow hole which is an inlet of air to such a path is arranged in, for example, the bottom portion 143. On the other hand, an air outflow hole which is an outlet of air from such a path is the opening 142.

The stick-shaped base material 150 includes a base material portion 151 and a suction portion 152. The base material portion 151 includes an aerosol source. In the present configuration example, the aerosol source is not limited to a liquid, and may be a solid. With the stick-shaped base material 150 held in the holding part 140, at least part of the base material portion 151 is housed in the internal space 141, and at least part of the suction portion 152 projects from the opening 142. Through user inhalation via the suction portion 152 projecting from the opening 142 which comes into contact with the user's mouth, air flows in from an air inflow hole (not illustrated) to the internal space 141, and reaches the user's oral cavity together with the aerosol produced from the base material portion 151.

The heating unit 121B has a configuration similar to that of the heating unit 121A according to the first configuration example. However, in the example shown in FIG. 3, the heating unit 121B is configured in a film shape, and is arranged so as to cover the outer periphery of the holding part 140. When the heating unit 121B generates heat, the base material portion 151 of the stick-shaped base material 150 is heated from the outer periphery, and thereby aerosol is produced.

The heat-insulating part 144 prevents heat transfer from the heating unit 121B to another constituent element. For example, the heat-insulating part 144 is configured from a vacuum-insulating material, an aerogel-insulating material, etc.

A configuration example of the inhaling device 100B has been described above. As a matter of course, the configuration of the inhaling device 100B is not limited to the above, and various configurations that will be described below as examples may be adopted.

As an example, the heating unit 121B may be configured in a blade shape and arranged so as to project from the bottom portion 143 of the holding part 140 into the internal space 141. In this case, the blade-shaped heating unit 121B is inserted into the base material portion 151 of the stick-shaped base material 150, and the base material portion 151 of the stick-shaped base material 150 is heated from the inside. As another example, the heating unit 121B may be arranged so as to cover the bottom portion 143 of the holding part 140. Also, the heating unit 121B may be configured as a combination of two or more of a first heating unit that covers an outer periphery of the holding part 140, a blade-shaped second heating unit, and a third heating unit that covers a bottom portion 143 of the holding part 140.

As another example, the holding part 140 may include an open/close mechanism such as a hinge, which opens and closes part of an outer shell that forms the internal space 141. By opening and closing the outer shell, the holding part 140 may hold the stick-shaped base material 150 inserted into the internal space 141. In this case, the heating unit 121B may be provided in the place of the holding part 140 which holds the stick-shaped base material 150, and may heat the stick-shaped base material 150 while pressing it.

Moreover, the means for atomizing the aerosol source are not limited to heating by the heating unit 121B. For example, the means for atomizing the aerosol source may be based on induction heating.

Also, the inhaling device 100B may further include the heating unit 121A, the liquid guide unit 122, the liquid storage unit 123, and the airflow path 180 according to the first configuration example, and the air outflow hole 182 of the airflow path 180 may also function as an air inflow hole to the internal space 141. In this case, a mixed fluid of the aerosol and air produced by the heating unit 121A flows into the internal space 141, is further mixed with the aerosol produced by the heating unit 121B, and reaches the oral cavity of the user.

### <<Configuration Example of Information Processing Server>>

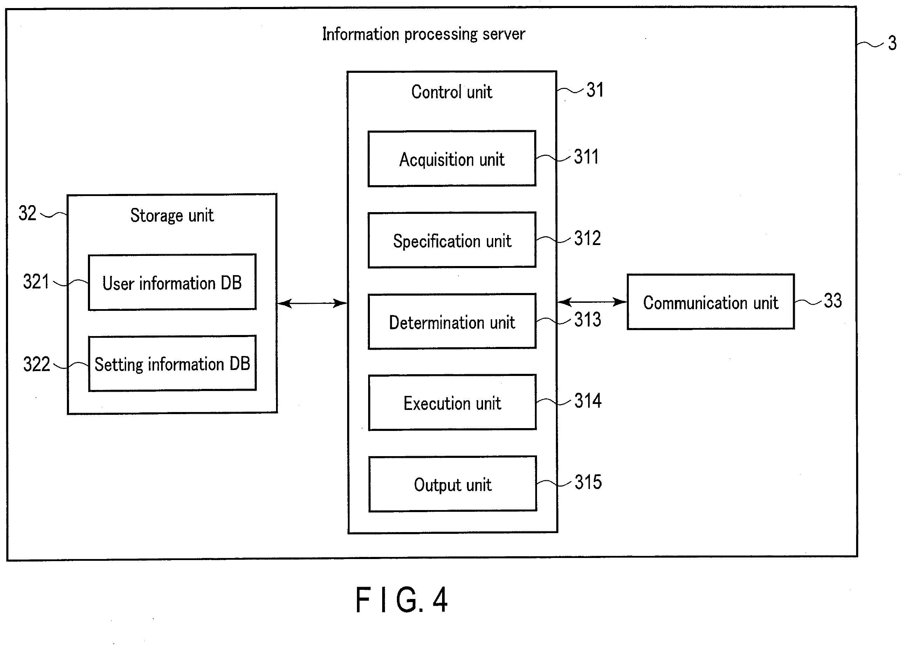

FIG. 4 is a block diagram schematically showing a configuration example of an information processing server according to the first embodiment of the present invention.

The information processing server 3 includes a control unit 31, a storage unit 32, and a communication unit 33. These units are mutually connected via a bus line.

The control unit 31 controls the entire operation of the information processing server 3 in accordance with programs stored in the storage unit 32. The control unit 31 is configured of, for example, electronic circuitry such as a processor. The processor is, for example, a CPU or the like. By executing the programs stored in the storage unit 32, the control unit 31 realizes the respective units that will be discussed later, and executes a variety of operations.

The storage unit 32 is configured of a main storage and an auxiliary storage. The main storage is configured of, for example, a volatile memory that provides a work area for the processor. The main storage is configured of, for example, a random access memory (RAM) or the like. The auxiliary storage is configured of, for example, a non-volatile memory that stores various types of information and programs for operation of the information processing server 3. The auxiliary storage is configured of, for example, a hard disk drive (HDD), a solid-state drive (SSD), or the like. The storage unit 32 stores programs for causing the control unit 31 to implement the respective units that will be discussed later. The storage unit 32 stores user information DB 321 and setting information DB 322.

The user information DB 321 is a database that stores user information which is information unique to a user who possesses the user terminal 2. For example, the user information DB 321 includes a user information record including at least one of a registration code, a user ID, a device ID, user data, and a registration flag. The user ID is an identifier uniquely assigned to a user. The user ID is an example of identification information of a user. The user ID is used for user registration by the information processing server 3. The user ID is input by the user from an input unit (not shown) of the user terminal 2 and is set at the time of user registration. The user ID is transmitted from the user terminal 2 to the information processing server 3 at the time of user registration, and stored in the user information DB 321.

The registration code is information used to register the inhaling device 1 in the information processing server 3. The registration code is configured by, for example, a combination of a predetermined number of alphanumeric characters, and is provided for each inhaling device 1. The registration code is transmitted from the inhaling device 1 to the information processing server 3 via the user terminal 2, and stored in the user information DB 321.

The device ID is a device ID of the inhaling device 1 associated with the user terminal 2. The device ID of the inhaling device 1 is identification information for identifying an individual inhaling device 1. The device ID is, for example, a serial number. The device ID is an example of identification information of the inhaling device 1. The device ID is transmitted from the user terminal 2 to the information processing server 3, and stored in the user information DB 321.

The user data is data for specifying a user. The user data is used for user registration by the information processing server 3. The user data includes, for example, at least one of information indicating a user name, user's sex, age, identity verification information, or the like. The identity verification information is, for example, an image of a public identification such as a driver's license or an Individual Number Card, or an electronic certificate for personal identification read from an Individual Number Card or the like. The identity verification information may be, for example, information with which the age of the user can be verified. The user data is input from an input unit (not shown) of the user terminal 2 by the user at the time of user registration or at the time of updating the user registration thereafter. The user data is transmitted from the user terminal 2 to the information processing server 3, and stored in the user information DB 321.

The registration flag is information indicating that user registration is has been completed in the information processing server 3. The addition of the registration flag means that the user can use various services provided by the information processing server 3. The user registration is, for example, account registration for authenticating the user.

The user information may be updated as appropriate. The user information may include information other than those described above.

The setting information DB 322 is a database that records information for setting of a plurality of types of inhaling devices 1. Hereinafter, the information for setting of the inhaling device 1 is also referred to as "setting information". The setting information differs depending on the type of the inhaling device 1. The setting information is, for example, guide information indicating a procedure for setting the inhaling device 1, which is performed by the user when the inhaling device 1 is used for the first time. The setting information DB 322 stores the setting information in association with the type information of the inhaling device 1. The type information is, for example, information on a model number, version information, and the like of the inhaling device 1. The type information of the inhaling device 1 may be part of the device ID of the inhaling device 1, or may be information associated with the registration code or the device ID of the inhaling device 1 through a database (not shown). The data of the setting information DB 322 may be stored in advance in the storage unit 32, or downloaded from a server (not shown) to the information processing server 3 via the network N. The setting information DB 322 may be updated as appropriate.

The communication unit 33 is configured of one or more communication interfaces that enable communications compatible with a given wireless communication standard to be performed. The communication unit 33 includes one or more communication interfaces that enable communications to be performed between the information processing server 3 and the user terminal 2 via the network N as described above.

A hardware configuration of the information processing server 3 is not limited to the above-described configuration. The above-described constituent elements of the information processing server 3 may be suitably omitted or changed, and a new constituent element may be added to the information processing server 3.

Each of the units realized by the above-described control unit 31 will be described.

The control unit 31 realizes an acquisition unit 311, a specification unit 312, a determination unit 313, an execution unit 314, and an output unit 315. Each unit realized by the control unit 31 can also be referred to as each function. Each unit being realized by the control unit 31 can also be regarded as each unit being realized by the processor.

The acquisition unit 311 acquires, for example, the registration code from the user terminal 2 connected to the inhaling device 1 via the communication unit 33 in response to the activation of the inhaling device 1. The acquisition unit 311 may acquire the device ID of the inhaling device 1 from the user terminal 2 connected to the inhaling device 1 via the communication unit 33 in response to the activation of the inhaling device 1. Furthermore, the acquisition unit 311 acquires information used for user registration from the user terminal 2 via the communication unit 33. The information used for the user registration is hereinafter also referred to as "user registration information". The user registration information includes a user ID. At the time of user registration or update of user registration, the user registration information includes user data in addition to the user ID. If the user has completed the user registration in the past and does not update the user registration, the user registration information may not include user data.

The user registration refers to registering user registration information of a user who uses the inhaling device 1 in the information processing server 3. The user registration may be registering the inhaling device 1, that is, registration of the inhaling device 1 (so-called device registration). The user registration may be registering a user who uses the inhaling device 1. The completion of the user registration may be a case where either the registration of the inhaling device 1 (so-called device registration) or the registration of the user has been completed. The completion of the user registration may be a case where both the registration of the inhaling device 1 (so-called device registration) and the registration of the user are completed.

The user registration information includes at least one of the registration code, the device ID, and the user ID. The user registration information may include only one of the registration code, the device ID, and the user ID. The user registration information may include a plurality of pieces of information among the registration code, the device ID, and the user ID.

The specification unit 312 specifies the setting information corresponding to the registration code or the device ID acquired by the acquisition unit 311.

The determination unit 313 determines whether or not the user registration of the user has been completed based on the user registration information acquired by the acquisition unit 311. The determination unit 313 determines whether or not the registration of the inhaling device 1 (so-called device registration) has been completed based on the registration code or the device ID in the user registration information acquired by the acquisition unit 311. The determination unit 313 may determine whether or not the registration of the user has been completed based on the user ID included in the user registration information acquired by the acquisition unit 311. The determination unit 313 may determine whether or not both the registration of the inhaling device 1 (so-called device registration) and the registration of the user are completed.

The execution unit 314 executes the user registration of the user based on the user registration information acquired by the acquisition unit 311 in response to the determination unit 313 determining that the user registration of the user has not been completed.

The output unit 315 outputs the setting information specified by the specification unit 312 to the user terminal 2 via the communication unit 33.

### «Example of Processing by Information Processing Server»

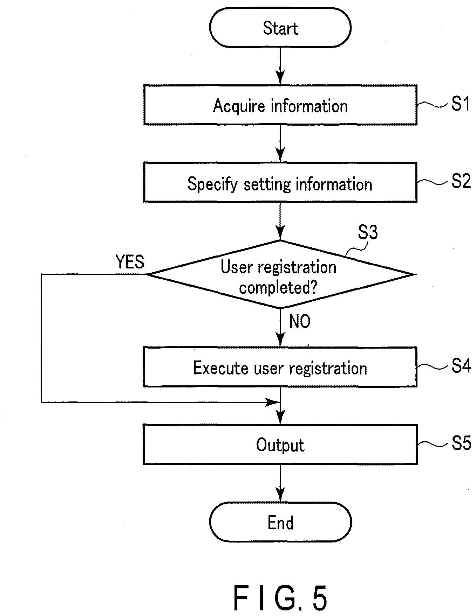

FIG. 5 is a flowchart showing an example of processing by the information processing server according to the first embodiment of the present invention.

The processing procedure described below is merely an example, and each processing may be changed as much as possible. In addition, in the processing procedure described below, steps can be omitted, replaced, and added as appropriate according to the embodiment.

In order to simplify the description, the user A, the inhaling devices 1a and the user terminal 2a will be described below as examples. The user A is a user who possesses the inhaling device 1a and the user terminal 2a.

The acquisition unit 311 acquires the registration code or the device ID of the inhaling device 1a from the user terminal 2a connected to the inhaling device 1a in response to the activation of the inhaling device 1a (step S1). At step S1, the acquisition unit 311 acquires, for example, the user registration information of the user A together with the registration code or the device ID of the inhaling device 1a from the user terminal 2a via the communication unit 33. In this example, the inhaling device 1a transmits the registration code or the device ID of the inhaling device 1a to the user terminal 2a in response to activation such as initial activation. The user terminal 2a becomes able to communicate with the inhaling device 1a in response to the activation of the inhaling device 1a, and receives the registration code or the device ID of the inhaling device 1a transmitted from the inhaling device 1a. In response to reception of the registration code or the device ID of the inhaling device 1a from the inhaling device 1a, the user terminal 2a transmits the user registration information of the user A together with the registration code or the device ID of the inhaling device 1a to the information processing server 3 via the network N. The user registration information is information input by the user A from an input unit (not shown) of the user terminal 2a. The user registration information includes a user ID. At the time of user registration or update of user registration, the user registration information may include user data in addition to the user ID. The acquisition unit 311 may acquire both the registration code and the device ID of the inhaling device 1a.

A case where the user ID of the user A acquired by the acquisition unit 311 already exists in the user information DB 321 will be described. If the user registration of the user A has already been completed, the user ID of the user A already exists in the user information DB 321. The acquisition unit 311 accordingly adds, to the user information DB 321, the acquired registration code or device ID in association with the user ID already existing in the user information DB 321. If the user registration information includes the user data, the acquisition unit 311 adds the user data associated with the user ID to the user information DB 321 so as to be updated. Thereby, the user registration may be updated. Since the user registration of the user A is normally completed, the registration flag is added in association with the user ID of the user A in the user information DB 321.

A case where the user ID of the user A acquired by the acquisition unit 311 does not exist in the user information DB 321 will be described. The acquisition unit 311 adds, to the user information DB 321, a user information record in which the acquired registration code or device ID and the user ID and user data included in the acquired user registration information are associated with each other. Since the user registration of the user A has not been completed, the registration flag is not added in association with the user ID of the user A in the user information DB 321.

The specification unit 312 specifies the setting information corresponding to the registration code or the device ID acquired by the acquisition unit 311 (step S2). At step S2, the specification unit 312 acquires, for example, the registration code or device ID of the inhaling device 1a acquired by the acquisition unit 311 from the user information DB 321. The specification unit 312 acquires the type information of the inhaling device 1a based on part of the registration code or the device ID of the inhaling device 1a or a database (not shown). The specification unit 312 specifies the setting information associated with the type information of the inhaling device 1a based on the setting information DB 322.

The determination unit 313 determines whether or not the user registration of the user A has been completed based on the user registration information (step S3). At step S3, the determination unit 313 acquires, for example, the user ID acquired by the acquisition unit 311 from the user information DB 321. The determination unit 313 determines whether or not the user registration has been completed based on the registration flag associated with the user ID. The determination unit 313 may determine whether or not the user registration has been completed by checking the user ID against a database (not shown) that manages information on registered users. Note that in the present embodiment, "completion" of user registration includes a state in which user registration has already been performed, that is, a state in which user registration has been made.

Upon the determination unit 313 determining that the user registration of the user A has been completed (step S3: YES), the processing shifts from step S3 to step S5. Upon the determination unit 313 determining that the user registration of the user A has not been completed (step S3: NO), the processing shifts from step S3 to step S4.

In response to the determination unit 313 determining that the user registration of the user A has not been completed, the execution unit 314 executes the user registration of the user A based on the user registration information (step S4). At step S4, the execution unit 314 acquires, for example, the user data included in the user registration information acquired by the acquisition unit 311 from the user information DB 321. The execution unit 314 executes the user registration of the user A based on the user data. The execution unit 314 adds the registration flag in association with the user ID of the user A in the user information DB 321. Execution of user registration by the execution unit 314 corresponds to a state in which user registration has been made. According to this example, the information processing server 3 can execute user registration without newly acquiring user registration information from the user A.

In an example in which the user data includes identity verification information of the user A, the execution unit 314 executes user registration of the user A based on the identity verification information of the user A. In a case where the user A has reached the predetermined age, the execution unit 314 executes user registration of the user A. On the other hand, if the user A has not reached the predetermined age, the execution unit 314 does not execute the user registration of the user A. According to this example, the information processing server 3 can confirm the age of the user A when the user registration is executed. Therefore, the information processing server 3 can support use of the inhaling device 1a in accordance with age regulations.

The output unit 315 outputs the setting information specified by the specification unit 312 to the user terminal 2a (step S5). At step S5, the output unit 315 outputs, for example, the setting information for the inhaling device 1a specified by the specification unit 312 to the user terminal 2a via the communication unit 33. In the present embodiment, "outputting" by the output unit 315 includes "transmitting" data.

The output unit 315 outputs, for example, the setting information to the user terminal 2a in accordance with a user registration state of the user A based on the user registration information. The user registration state is a state in which user registration has been made. The output unit 315 outputs the setting information of the inhaling device 1a to the user terminal 2a in response to the determination unit 313 determining that the user registration of the user A has been completed. Determination by the determination unit 313 that the user registration of the user A has been completed corresponds to a state in which the user registration of the user A has been made. Alternatively, the output unit 315 outputs the setting information of the inhaling device 1a to the user terminal 2a in response to the execution unit 314 executing the user registration of the user A. Execution of user registration of the user A by the execution unit 314 corresponds to a state in which user registration of the user A has been made. According to this example, the information processing server 3 can present the setting information only to the user whose user registration has been completed. Therefore, the information processing server 3 can prevent use by users whose user registration has not been completed.

In the processing performed by the information processing server 3, step S3 to step S4 may be omitted. That is, at step S1, the acquisition unit 311 acquires the registration code or the device ID of the inhaling device 2a from the user terminal 1a via the communication unit 33, but does not need to acquire the user registration information. The information processing server 3 does not determine the completion of the user registration and does not execute the user registration. The output unit 315 may output the setting information specified by the specification unit 312 to the user terminal 2a in response to the acquisition unit 311 acquiring the identification information of the inhaling device 1a.

Although illustration is omitted in FIG. 5, if the user registration has not been completed for a predetermined reason in the execution of the user registration at step S4, the information processing server 3 may output to the user terminal 2 an error signal indicating that the user registration cannot be performed. If outputting error information, the output unit 315 does not output the setting information. The predetermined reason is, for example, that the identity verification information is not included in the user data. The predetermined reason is, for example, that the age of the user of the identity verification information included in the user data has not reached a predetermined age. Furthermore, there is, for example, a case where the acquired registration code or device ID is already used for user registration of another user. The predetermined reason is not limited to these examples, and may be any reason as long as the user registration cannot be executed. The error signal may include information relating to the predetermined reason.

According to this example, the user terminal 2a can acquire setting information corresponding to the inhaling device 1a used by the user A from the outside. Therefore, even if the setting information is not stored in advance in the inhaling device 1a or the user terminal 2a, the information processing server 3 can present the setting information to the user A. Furthermore, memory resources of the inhaling device 1a or the user terminal 2a can be saved. In addition, the information processing server 3 can present the setting information corresponding to the inhaling device 1a necessary for the user A at a necessary timing without requiring the user A to search for the setting information.

The information processing device according to the first embodiment may be realized by a single device as described using the information processing server 3 as an example, or by a plurality of devices in which functions are distributed.

### [Second Embodiment]

Hereinafter, the second embodiment will be described with reference to the accompanying drawings.

In the second embodiment, similarly to the first embodiment, setting information is displayed on a user terminal based on the identification information of the inhaling device. In the second embodiment, the user terminal is an example of the information processing terminal.

The same components as those of the first embodiment are denoted by the same reference numerals, and descriptions thereof are omitted. The explanation of the second embodiment will focus mainly on the portions that differ from the first embodiment.

### «Configuration Example of Information Processing Server»

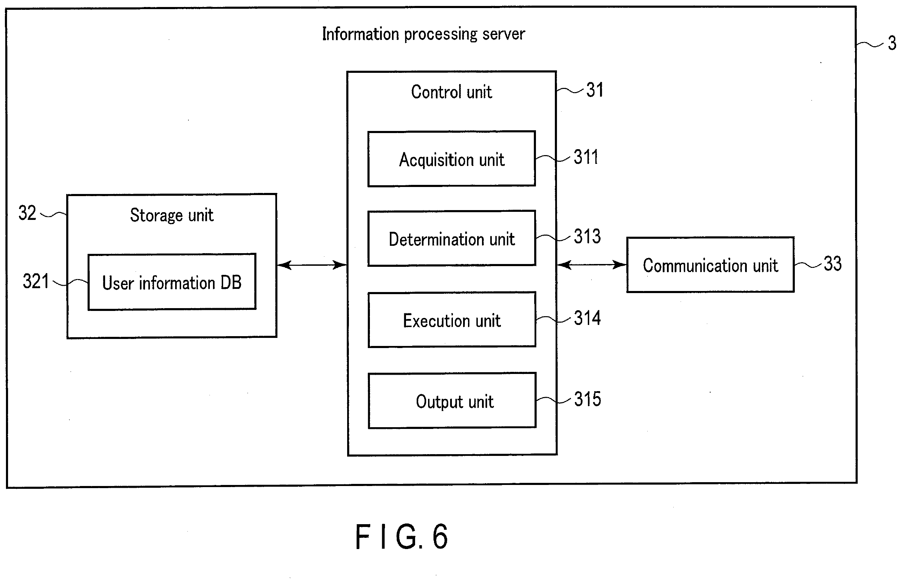

FIG. 6 is a block diagram schematically showing a configuration example of an information processing server according to the second embodiment of the present invention.

The storage unit 32 stores programs for causing the control unit 31 to implement the respective units that will be discussed later. The storage unit 32 stores user information DB 321. Unlike the first embodiment, the storage unit 32 does not store the setting information DB 322.

A hardware configuration of the information processing server 3 is not limited to the above-described configuration. The above-described constituent elements of the information processing server 3 may be suitably omitted or changed, and a new constituent element may be added to the information processing server 3.

Each of the units realized by the control unit 31 will be described.

The control unit 31 realizes the acquisition unit 311, the determination unit 313, the execution unit 314, and the output unit 315. Unlike the first embodiment, the control unit 31 does not include the specification unit 312. Each unit realized by the control unit 31 can also be referred to as each function. Each unit being realized by the control unit 31 can also be regarded as each unit being realized by the processor.

The acquisition unit 311 acquires the user registration information of the user from the user terminal 2 via the communication unit 33.

The determination unit 313 determines whether or not the user registration of the user has been completed based on the user registration information acquired by the acquisition unit 311. The determination unit 313 determines whether or not the registration of the inhaling device 1 (so-called device registration) has been completed based on the registration code or the device ID in the user registration information acquired by the acquisition unit 311. The determination unit 313 may determine whether or not the registration of the user has been completed based on the user ID included in the user registration information acquired by the acquisition unit 311. The determination unit 313 may determine whether or not both the registration of the inhaling device 1 (so-called device registration) and the registration of the user are completed.

In response to the determination unit 313 determining that the user registration of the user has not been completed, the execution unit 314 executes the user registration of the user based on the user registration information.

The output unit 315 outputs notification to the user terminal 2 via the communication unit 33. The notification is a notification relating to completion of the user registration of the user. The notification indicates that the user registration of the user has been made. The user registration having been made corresponds to the user registration of the user having been completed or the user registration of the user having been executed.

### <<Configuration Example of User Terminal>>

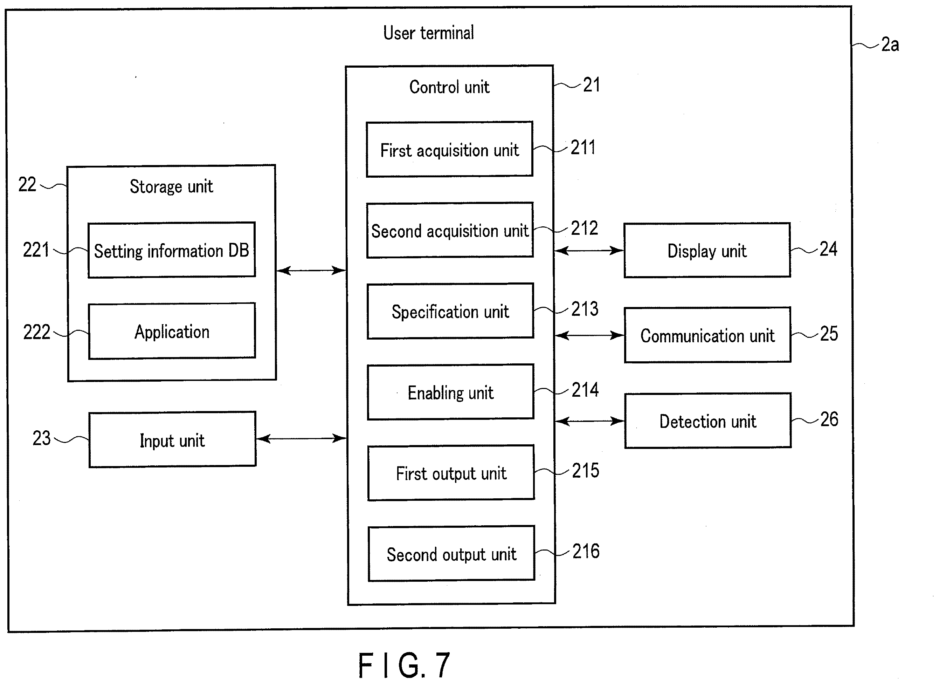

FIG. 7 is a block diagram schematically showing a configuration example of a user terminal according to the second embodiment of the present invention.

The user terminal 2a includes a control unit 21, a storage unit 22, an input unit 23, a display unit 24, a communication unit 25, and a detection unit 26. These units are mutually connected via a bus line.

The control unit 21 controls the entire operation of the user terminal 2a in accordance with a program stored in the storage unit 22. The control unit 21 is configured of, for example, electronic circuitry such as a processor. The processor is, for example, a CPU or the like.

The storage unit 22 is configured of a main storage and an auxiliary storage, similarly to the above-described storage unit 32. The storage unit 22 stores programs for causing the control unit 21 to implement the respective units that will be discussed later. The storage unit 22 stores a setting information DB 221 and an application 222.

Similarly to the above-described setting information DB 322, the setting information DB 221 is a database that stores setting information of the inhaling device 1. The data of the setting information DB 221 may be downloaded from the information processing server 3 via the network N, or may be downloaded from a server (not shown) to the user terminals 2a via the network N. The setting information DB 322 may be updated as appropriate. The data of the setting information DB 322 may be downloaded together with the download of the application 222.

The application 222 is an application program that provides various functions to the user terminal 2a. The application 222 may be downloaded from the information processing server 3 via the network N, or may be downloaded from a server (not shown) to the user terminal 2a via the network N. The application 222 may be updated as appropriate. The application 222 provides, for example, functions of displaying the setting information stored in the setting information DB 221 on the display unit 24. The application 222 displays, for example, setting information of a plurality of types of inhaling devices 1 on the display unit 24. The application 222 provides, for example, a function of enabling display of the setting information stored in the setting information DB 221.

The input unit 23 receives an instruction or captures data based on an operation by a user. The input unit 23 is configured of, for example, a keyboard, a touch pad, a camera, or the like.

The display unit 24 displays a variety of screens. The display unit 24 is configured of, for example, a liquid crystal display.

The communication unit 25 is configured of one or more communication interfaces that enable communications compatible with a given wired or wireless communication standard to be performed. The communication unit 25 includes one or more communication interfaces that enable communications to be performed between the user terminal 2a and the inhaling device 1a, as described above. The communication unit 25 includes one or more communication interfaces that enable communications to be performed between the user terminal 2a and the information processing server 3 via the network N, as described above.

The detection unit 26 is configured of a sensor that detects various types of information. The detection unit 26 includes a sensor that detects position information of the user terminal 2a. For example, the position information is information indicating latitude and longitude. The sensor that detects position information is, for example, a GPS sensor.

A hardware configuration of the user terminal 2a is not limited to the above-described configuration. The above-described constituent elements of the user terminal 2a may be suitably omitted or changed, and a new constituent element may be added to the user terminal 2a. In the description given herein, the configuration example of the user terminal 2a has been described; however, the configuration of the user terminal 2 other than the user terminal 2a is similar to that of the user terminal 2a, and the description thereof will be omitted.

Each of the units realized by the above-described control unit 21 will be described.

The control unit 21 realizes a first acquisition unit 211, a second acquisition unit 212, a specification unit 213, an enabling unit 214, a first output unit 215, and a second output unit 216. Each unit realized by the control unit 21 can also be referred to as each function. Each unit being realized by the control unit 21 can also be regarded as each unit being realized by the processor.

The first acquisition unit 211 acquires the registration code or the device ID of the inhaling device 1 from the inhaling device 1 via the communication unit 25 in response to activation of the inhaling device 1. The first acquisition unit 211 may acquire both the registration code and the device ID of the inhaling device 1 from the inhaling device 1.

The second acquisition unit 212 acquires a notification from the information processing server 3 via the communication unit 25.

In response to the second acquisition unit 212 acquiring the notification, the specification unit 213 specifies the setting information corresponding to the registration code or the device ID.

The enabling unit 214 enables the display of the setting information specified by the specification unit 213 based on the notification acquired by the second acquisition unit 212.

In response to the first acquisition unit 211 acquiring the registration code or the device ID, the first output unit 215 outputs the user registration information to the information processing server 3 via the communication unit 25.

The second output unit 216 outputs the setting information specified by the specification unit 213 to the display unit 24. Accordingly, the display unit 24 displays the setting information specified by the specification unit 213.

### «Example of Processing by Information Processing Server»

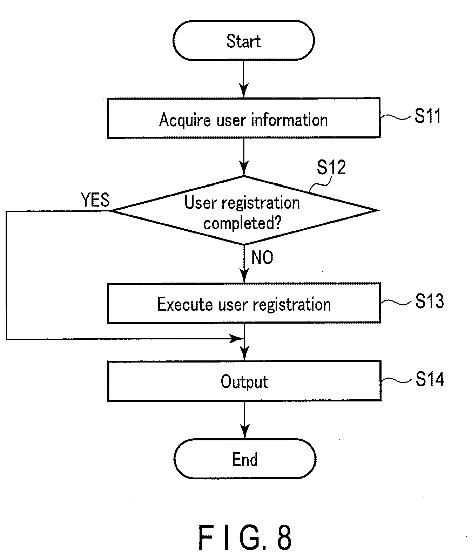

FIG. 8 is a flowchart showing an example of processing by the information processing server according to the second embodiment of the present invention.

The processing procedure described below is merely an example, and each processing may be changed as much as possible. In addition, in the processing procedure described below, steps can be omitted, replaced, and added as appropriate according to the embodiment.

In order to simplify the description, the user A, the inhaling devices 1a and the user terminal 2a will be described below as examples. The user A is a user who possesses the inhaling device 1a and the user terminal 2a.

The acquisition unit 311 acquires user registration information of the user A (step S11). At step S11, the acquisition unit 311 acquires, for example, the user registration information of the user A from the user terminal 2a via the communication unit 33. The user registration information of the user A is transmitted from the user terminal 2a connected to the inhaling device 1a to the information processing server 3 in response to the activation of the inhaling device 1a. The user registration information includes a user ID. At the time of user registration or update of user registration, the user registration information includes user data in addition to the user ID. As in the first embodiment, the acquisition unit 311 adds the acquired user registration information to the user information DB 321.

The determination unit 313 determines whether or not the user registration of the user A has been completed based on the user registration information (step S12). At step S12,, as in the first embodiment, the determination unit 313 determines, for example, whether or not the user registration of the user A has been completed.

Upon the determination unit 313 determining that the user registration of the user A has been completed (step S12: YES), the processing shifts from step S12 to step S14. Upon the determination unit 313 determining that the user registration of the user A has not been completed (step S12: NO), the processing shifts from step S12 to step S13.

In response to the determination unit 313 determining that the user registration of the user A has not been completed, the execution unit 314 executes the user registration of the user A (step S13). At step S13, the execution unit 314 executes, for example, the user registration of the user A as in the first embodiment. According to this example, the information processing server 3 can execute user registration without newly acquiring user registration information from the user A.

In an example in which the user data includes identity verification information of the user A, the execution unit 314 executes user registration of the user A based on the identity verification information of the user A. According to this example, the information processing server 3 can confirm the age of the user when the user registration is executed. Therefore, the information processing server 3 can support use of the inhaling device 1a in accordance with the age regulation.

The output unit 315 outputs the notification to the user terminal 2a (step S14). At step S14, the output unit 315 outputs, for example, a notification relating to the user registration completion of the user A to the user terminal 2a via the communication unit 33. For example, in response to the determination unit 313 determining that the user registration of the user A has been completed, the output unit 315 outputs to the user terminal 2a a notification indicating that the user registration of the user A has been completed. Alternatively, in response to the execution unit 314 executing the user registration of the user A, the output unit 315 outputs to the user terminal 2a a notification indicating that the user registration of the user A has been executed. "Outputting" to the user terminal 2a includes "transmitting" data to the user terminal 2a.

Although illustration is omitted in FIG. 8, if the user registration has not been completed for a predetermined reason in the execution of the user registration, the information processing server 3 may output an error signal indicating that the user registration cannot be performed to the user terminal 2. The error signal may include information relating to the predetermined reason.

### «Example of Processing by User Terminal»

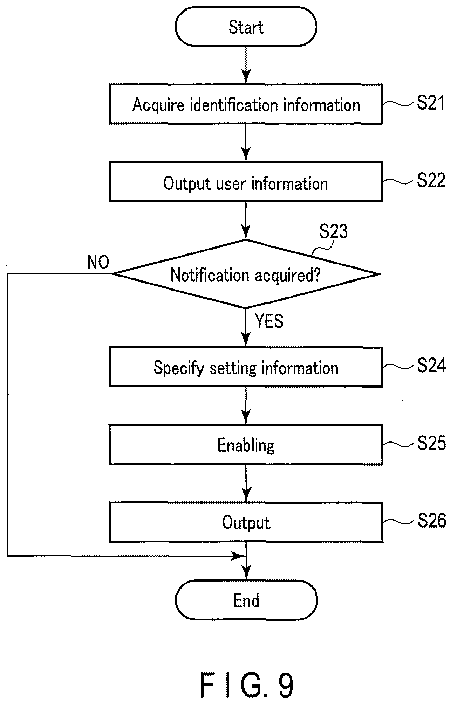

FIG. 9 is a flowchart showing an example of processing by the user terminal according to the second embodiment of the present invention.

The processing procedure described below is merely an example, and each processing may be changed as much as possible. In addition, in the processing procedure described below, steps can be omitted, replaced, and added as appropriate according to the embodiment.

In order to simplify the description, the user A, the inhaling devices 1a and the user terminal 2a will be described below as examples. The user A is a user who possesses the inhaling device 1a and the user terminal 2a.

The first acquisition unit 211 acquires the registration code or the device ID of the inhaling device 1a from the inhaling device 1a via the communication unit 25 in response to the activation of the inhaling device 1a (step S21). At step S21, the first acquisition unit 211 receives, for example, the registration code or the device ID of the inhaling device 1a from the inhaling device 1a via the communication unit 25 in response to the initial activation of the inhaling device 1a. In this example, the user terminal 2a becomes able to communicate with the inhaling device 1a in response to the activation of the inhaling device 1a, and receives the registration code or the device ID of the inhaling device 1a transmitted from the inhaling device 1a. The first acquisition unit 211 stores the acquired registration code or device ID of the inhaling device 1a in the storage unit 22. The acquired registration code or device ID is stored in the storage unit 22 one by one. The first acquisition unit 211 may acquire both the registration code and the device ID of the inhaling device 1a from the inhaling device 1a in response to the activation of the inhaling device 1a.

In response to the first acquisition unit 211 acquiring the registration code or the device ID, the first output unit 215 outputs the user registration information to the information processing server 3 via the communication unit 25 (step S22). At step S22, the first output unit 215 outputs, for example, the user registration information input by the user A via the input unit 23 to the information processing server 3. The user registration information includes a user ID. At the time of user registration or update of user registration, the user registration information includes user data in addition to the user ID. The user registration information input via the input unit 23 is stored in the storage unit 22 one by one. The user registration information may be updated as appropriate through an input by the user A. In response to the first acquisition unit 211 acquiring the registration code or the device ID, the first output unit 215 acquires the user registration information from the storage unit 22. The first output unit 215 outputs the acquired user registration information to the information processing server 3.

The second acquisition unit 212 acquires the notification relating to the completion of the user registration of the user A from the information processing server 3 via the communication unit 25 (step S23). At step S23, the second acquisition unit 212 acquires, for example, the notification relating to the completion of the user registration of the user A based on the user registration information output by the first output unit 215. Since the notification relating to the completion of the user registration of the user A is a response to the user registration information output by the first output unit 215, it is a notification based on the user registration information. For example, the second acquisition unit 212 acquires a notification indicating that the user registration of the user A has been completed from the information processing server 3. Alternatively, the second acquisition unit 212 acquires a notification indicating that the user registration of the user A has been executed from the information processing server 3.

Upon the second acquisition unit 212 acquiring the notification (step S23: YES), the processing shifts from step S23 to step S24. Upon the second acquisition unit 212 not acquiring the notification (step S23: NO), the processing ends.

In response to the second acquisition unit 212 acquiring the notification, the specification unit 213 specifies the setting information corresponding to the registration code or the device ID (step S24). At step S24, the specification unit 213 acquires, for example, the registration code or the device ID of the inhaling device 1a from the storage unit 22. The specification unit 312 specifies the type information of the inhaling device 1a based on the registration code or the device ID of the inhaling device 1a. The type information may be part of the registration code or the device ID of the inhaling device 1a, or may be associated with the registration code or the device ID of the inhaling device 1a through a database (not shown) stored in the storage unit 22. The specification unit 213 specifies the setting information associated with the type information of the inhaling device 1a based on the setting information DB 221.

The enabling unit 214 enables the display of the setting information specified by the specification unit 213 based on the notification acquired by the second acquisition unit 212 (step S25). At step S25, the enabling unit 214 enables, for example, the display of only the setting information specified by the specification unit 213 among the setting information stored in the setting information DB 221. On the other hand, the enabling unit 214 maintains the disabling of the display of the setting information other than the setting information specified by the specification unit 213 among the setting information stored in the setting information DB 221.

In response to the enabling unit 214 enabling the display of the setting information specified by the specification unit 213, the second output unit 216 outputs the setting information specified by the specification unit 213 to the display unit 24 (step S26). At step S26, the second output unit 216 outputs, for example, the setting information of the inhaling device 1a to the display unit 24. Accordingly, the display unit 24 displays the setting information of the inhaling device 1a. The display of the setting information of the inhaling device 1a is realized by, for example, a display function of the application 222.

According to this example, the user terminal 2a can acquire setting information of the inhaling device 1a used by the user A from the outside. Therefore, even if the setting information is not stored in advance in the inhaling device 1a, the user terminal 2a can present the setting information to the user A. Furthermore, memory resources of the inhaling device 1a can be saved. In addition, according to this example, the user terminal 2a enables the display of the setting information only for the users whose user registration has been completed. Therefore, the user terminal 2a can prevent use by users whose user registration has not been completed.

In the processing performed by the user terminal 2a, step S25 may be omitted. In this example, the display of the setting information stored in the setting information DB 221 is valid irrespective of whether or not the notification is acquired by the second acquisition unit 212. At step S26, the second output unit 216 outputs the setting information specified by the specification unit 213 to the display unit 24 based on the notification acquired by the second acquisition unit 212.

Although illustration is omitted in FIG. 9, if the user registration has not been completed for a predetermined reason in the execution of the user registration, the user terminal 2 may acquire an error signal indicating that the user registration cannot be performed from the information processing server 3. The error signal may include information relating to the predetermined reason. If the error signal is acquired, the user terminal 2 does not enable the display of the setting information and does not output the setting information to the display unit 24. The user terminal 2 may display the predetermined reason included in the acquired error signal on the display unit 24.

According to this example, the user terminal 2a can acquire setting information of the inhaling device 1a used by the user A from the outside. Therefore, even if the setting information is not stored in advance in the inhaling device 1a, the user terminal 2a can present the setting information to the user A. Furthermore, memory resources of the inhaling device 1a can be saved. In addition, according to this example, the user terminal 2a can present the setting information only for users whose user registration has been completed. Therefore, the user terminal 2a can prevent use by users whose user registration has not been completed. In addition, the user terminal 2a can present the setting information corresponding to the inhaling device 1a necessary for the user A at a necessary timing without requiring the user A to search for the setting information.

The information processing device according to the second embodiment may be realized by a single device as described using the information processing server 3 as an example, or by a plurality of devices in which functions are distributed.

The information processing terminal according to the second embodiment may be realized by a single device as described using the user terminal 2 as an example, or by a plurality of devices in which functions are distributed.

The program may be transferred in a state of being stored in the device, or may be transferred in a state of not being stored in the device. In the latter case, the program may be transferred via a network, or may be transferred in a state of being recorded in a recording medium. The recording medium is a non-transitory tangible medium. The recording medium is a computer-readable medium. The recording medium may be any medium that can store a program and can be read by a computer, such as a CD-ROM or a memory card, and may be in any form.

### <<Supplemental Note>>

### [Modification 1]

In the above-described embodiments, the information processing server 3 outputs the setting information of the inhaling device 1 to the user terminal 2 of the user whose user registration has been completed. Modification 1 is an embodiment in which the information processing server 3 outputs a control signal for enabling the inhaling device 1 of the user whose user registration has been completed, in addition to the output of the setting information. In Modification 1, part or all of the functions of the inhaling device 1 are limited or disabled until the user registration is completed.

Instead of the information processing server 3, the user terminal 2 that has acquired the setting information may output the control signal for enabling the inhaling device 1 of the user who has completed the user registration.

The same components as those of the first and second embodiments are denoted by the same reference numerals, and descriptions thereof are omitted. The explanation of Modification 1 will focus mainly on the portions that differ from the first and second embodiments.

### «Configuration Example of Information Processing Server»

The determination unit 313 determines whether or not the user registration of the user has been completed based on the user registration information acquired by the acquisition unit 311.

The output unit 315 can output, via the communication unit 33, a control signal for controlling the inhaling device 1 via the user terminal 2. The control signal for controlling the inhaling device 1 is, for example, a signal for enabling part or all of the operations of the heating unit 121 of the inhaling device 1.

The control signal may be, for example, a signal for controlling the notification unit 113 of the inhaling device 1. In a case where the notification unit 113 is a light-emitting device, the control signal is, for example, a signal for changing the color or pattern of light emission. The control signal is, for example, a signal for causing the light-emitting device to emit light in a predetermined color or in a predetermined pattern when user registration is completed. In a case where the notification unit 113 is a display device that displays an image, the control signal is, for example, a signal for causing the display device to display predetermined information. The control signal is, for example, a signal for causing the display device to display information indicating that the user registration has been completed when the user registration is completed. In a case where the notification unit 113 is a sound output device that outputs a sound, the control signal is, for example, a signal for outputting a predetermined sound. The control signal is, for example, a signal for causing the sound output device to output a predetermined sound indicating that the user registration has been completed when the user registration is completed. In a case where the notification unit 113 is a vibration device that vibrates, the control signal is a signal for changing a vibration pattern. Note that the control signal is not limited to these examples. The control signal is, for example, a signal for causing the vibration device to output predetermined vibration indicating that the user registration has been completed when the user registration is completed.

The output unit 315 outputs a control signal for controlling the inhaling device 1 via the user terminal 2 in addition to outputting the notification regarding the user registration completion to the user terminal 2a to the user terminal 2a. If the determination unit 313 determines, for example, that the user registration has been completed, the output unit 315 outputs, for example, a control signal for controlling the inhaling device 1. If the user registration is executed by the execution unit 314, the output unit 315 outputs, for example, a control signal for controlling the inhaling device 1. The output unit 315 outputs, for example, a control signal for enabling part or all of the operations of the heating unit 121 of the inhaling device 1.

### «Configuration Example of User Terminal»

In a case where a control signal for controlling the inhaling device 1 is acquired from the information processing server 3, the control unit 21 outputs the control signal to the inhaling device 1 via the communication unit 25. The control unit 21 outputs, for example, to the inhaling device 1, a control signal for enabling part or all of the operations of the heating unit 121 of the inhaling device 1.

In a case where a control signal for controlling the inhaling device 1 is acquired from the information processing server 3, the display unit 24 may display information indicating content in which the inhaling device 1 is controlled based on the control signal. The display unit 24 may display, for example, information indicating that part or all of the operations of the heating unit 121 of the inhaling device 1 have been enabled based on the acquisition of the control signal for enabling part or all of the operations of the heating unit 121 of the inhaling device 1.

### «Configuration Example of Inhaling Device»

In a case where a control signal for controlling the inhaling device 1 is acquired from the user terminal 2, the control unit 116 of the inhaling device 1 controls each function of the inhaling device 1 based on the control signal.

The control unit 116 controls part or all of the operations of the heating unit 121 based on the acquisition of the control signal for enabling part or all of the operations of the heating unit 121 of the inhaling device 1. In a case where all functions of the heating unit 121 of the inhaling device 1 are disabled, the control unit 116 enables, for example, part or all of the operations of the heating unit 121 based on the acquisition of the control signal for enabling part or all of the operations of the heating unit 121.

In a case where a plurality of heating profiles are stored in the storage unit 114, the enabling of part of the operations of the heating unit 121 is, for example, to enable the heating unit 121 to operate in accordance with part of the plurality of heating profiles. The control unit 116 enables the heating unit 121 to operate in accordance with part of the heating profiles based on the acquisition of the control signal indicating enabling the heating unit 121 to operate in accordance with part of the heating profiles.

The heating profile is information that defines operation of generating aerosol (that is, an operation of heating a base material) performed by the inhaling device 1. The inhaling device 1 heats the base material in accordance with the heating profiles to generate aerosol.

The heating profile is, for example, information indicating a time-series change in a parameter relating to an operation of generating aerosol performed by the inhaling device 1. An example of the parameter is the temperature of the heating unit 121. The control unit 116 sets the temperature defined in the heating profiles as a target temperature, and controls the temperature of the heating unit 121 so that a temperature similar to the target temperature is realized in the heating unit 121. The temperature control of the heating unit 121 can be realized by, for example, publicly known feedback control. Specifically, the control unit 116 causes the power from the power supply 111 to be supplied to the heating unit 121 in the form of a pulse by pulse width modulation (PWM) or pulse frequency modulation (PFM). In this case, the control unit 116 can control the temperature of the heating unit 121 by adjusting the duty ratio of the power pulse.

In the feedback control, the control unit 116 may control the power supplied to the heating unit 121, for example, the above-described duty ratio, based on the difference between the temperature of the heating unit 121 and the target temperature, or the like. The feedback control may be, for example, a proportional-integral-differential controller (PID controller). The temperature of the heating unit 121 can be quantified by, for example, measuring or estimating an electric resistance value of a heating resistor constituting the heating unit 121. This is because the electric resistance value of the heating resistor changes depending on the temperature. The electric resistance value of the heating resistor can be estimated, for example, by measuring the amount of voltage drop in the heating resistor. The amount of voltage drop in the heating resistor can be measured by a voltage sensor that measures the potential difference applied to the heating resistor. In another example, the temperature of the heating unit 121 can be measured by a temperature sensor installed near the heating unit 121.

In addition, the control unit 116 changes the color or pattern of light emission of the light-emitting device based on the acquisition of the control signal for changing the color or pattern of light emission of the light-emitting device which is the notification unit 113 of the inhaling device 1. The control unit 116 causes, for example, the light-emitting device to emit light in a predetermined color or a predetermined pattern based on the acquisition of the control signal for causing the light-emitting device to emit light in a predetermined color or a predetermined pattern indicating that user registration has been completed.

In addition, the control unit 116 causes the display device to display the predetermined information based on the acquisition of the control signal for causing the display device which is the notification unit 113 of the inhaling device 1 to display the predetermined information. The control unit 116 causes, for example, the display device to display the information indicating that the user registration has been completed based on the acquisition of the control signal for displaying the predetermined information indicating that the user registration has been completed.

In addition, the control unit 116 causes the sound output device to output the predetermined sound based on the acquisition of the control signal for causing the sound output device which is the notification unit 113 of the inhaling device 1 to output the predetermined sound. The control unit 116 causes, for example, the sound output device to output the sound indicating that the user registration has been completed based on the acquisition of the control signal for outputting the predetermined sound indicating that the user registration has been completed.

In addition, the control unit 116 changes the vibration pattern of the vibration device based on the acquisition of the control signal for changing the vibration pattern of the vibration device which is the notification unit 113 of the inhaling device 1. The control unit 116 causes, for example, the vibration device to vibrate with a predetermined vibration based on the acquisition of the control signal for causing the vibration device to vibrate with a predetermined vibration indicating that the user registration has been completed.

According to this example, the inhaling device 1 is capable of enabling part or all of the functions of the inhaling device 1 based on the control signal acquired from the information processing server 3 or the user terminal 2. If the user registration has been completed, the information processing server 3 or the user terminal 2 transmits, for example, a control signal for enabling part or all of the functions of the inhaling device 1 to the inhaling device 1, and it is therefore possible to enable part or all of the functions of the inhaling device 1 through completion of the user registration.

### [Modification 2]

Modification 2 is an embodiment in which a notification suggesting user registration is displayed in a case where the user terminal 2 receives smoking information relating to the inhaling device 1 from the inhaling device 1 of the user who has not completed user registration. The same components as those of the first and second embodiments and Modification 1 are denoted by the same reference numerals, and descriptions thereof are omitted. The explanation of Modification 2 will focus mainly on the portions that differ from the first and second embodiments and Modification 1.

### <<Configuration Example of Inhaling Device>>

In a case where various types of information relating to the inhaling device 1 are acquired, the control unit 116 outputs the acquired various types of information to the user terminal 2 via the communication unit 115. The control unit 116 outputs, for example, to the user terminal 2, values involved with user inhalation acquired by the sensor unit 112 such as a pressure sensor such as a microphone capacitor, a flowrate sensor, or a temperature sensor. The value involved with inhalation by the user may be, for example, puff indication indicating that the user has inhaled, and may be any information as long as it is information relating to inhalation by the user such as the number of puffs per smoking session, the puff duration per smoking session, and the amount of inhalation per inhalation. In addition, the control unit 116 may output to the user terminal 2 information indicating that a predetermined action has been performed based on the user performing the predetermined action on the inhaling device 1. The predetermined action is, for example, the user pressing a button of the inhaling device 1 to start heating. The control unit 116 may output to the user terminal 2 information relating to the heating unit 121 of the inhaling device 1. The control unit 116 may output, for example, to the user terminal 2, information indicating that preheating of the heating unit 121 has been started, information indicating that preheating of the heating unit 121 has been completed, information indicating an elapsed time from the start of the heating of the heating unit 121, information indicating that the heating of the heating unit 121 has ended, or the like.

In addition, in a case where information relating to charging is acquired from the power supply 111 of the inhaling device 1, the control unit 116 outputs the acquired information relating to charging to the user terminal 2 via the communication unit 115. The information relating to charging is, for example, a charging capacity of the power supply 111 or deterioration information of the power supply 111. In addition, in a case where the power supply 111 is charged from an external power supply, the inhaling device 1 may output to the communication unit 115 information indicating that it is charged.

In addition, in a case where predetermined error information caused in the inhaling device 1 or failure information of each unit of the inhaling device 1 is acquired, the control unit 116 outputs the acquired error information or failure information to the user terminal 2 via the communication unit 115. The predetermined error information may be, for example, a temporary or permanent error occurring in the power supply 111, the sensor unit 112, the control unit 116, or the heating unit 121. The failure information may be, for example, information to be acquired when the power supply 111, the sensor unit 112, the control unit 116, or the heating unit 121 becomes inoperable and needs to be replaced. Note that the permanent error information may be included in the failure information.

### «Configuration Example of User Terminal»

In a case where various types of information relating to the inhaling device 1 are acquired from the inhaling device 1, the control unit 21 inquires of the information processing server 3 via the communication unit 115 whether or not the user registration has been completed. The control unit 21 outputs at least one of the registration code, the device ID, or the user ID to the information processing server 3 via the communication unit 115 to inquire whether or not the user registration has been completed. The control unit 21 may inquire of the information processing server 3 whether or not the registration of the inhaling device 1 (so-called device registration) has been completed via the communication unit 115. In addition, the control unit 21 may inquire of the information processing server 3 via the communication unit 115 whether or not the registration of the user has been completed.

In a case where information indicating that the user registration has been completed has not been acquired from the information processing server 3 in the past, the control unit 21 may inquire of the information processing server 3 whether or not the user registration has been completed via the communication unit 115. In a case where information indicating that the user registration has been completed has been acquired from the information processing server 3 in the past, the control unit 21 may not inquire whether or not the user registration has been completed.

In a case where predetermined information is acquired from the inhaling device 1, the control unit 21 may inquire of the information processing server 3 via the communication unit 115 whether or not the user registration has been completed. The predetermined information may be part of various types of information relating to the inhaling device 1 acquired from the inhaling device 1. The predetermined information is, for example, a value involved with user inhalation acquired by the sensor unit 112. The predetermined information may be, for example, information indicating that the user has executed a predetermined action on the inhaling device 1. The predetermined information may be information relating to the heating unit 121 of the inhaling device 1. The predetermined information may be information relating to charging of the power supply 111 of the inhaling device 1. The predetermined information may be predetermined error information which has occurred in the inhaling device 1 or failure information of each unit of the inhaling device 1.

Since a trigger for the control unit 21 to inquire whether or not the user registration has been completed is a case where predetermined information is acquired, by setting the predetermined information as part of the various types of information relating to the inhaling device 1, it is possible to adjust the frequency of inquiry. In a case where the predetermined information is a value involved with user inhalation or information indicating that the user has executed a predetermined action on the inhaling device 1, the control unit 21 can inquire whether or not the user registration has been completed every time the user uses the inhaling device 1, and the frequency of inquiry can be increased. In addition, in a case where the predetermined information is information indicating that the power supply 111 is charged from the external power supply, the control unit 21 can inquire whether or not the user registration has been completed every time the power supply 111 is charged from the external power supply, and the frequency of inquiry can be reduced.

In a case where information indicating that the user registration has not been completed is acquired from the information processing server 3 as a result of the inquiry, the control unit 21 outputs, to the user, information suggesting the user to perform the user registration. In a case where information indicating that the user registration has not been completed is acquired from the information processing server 3, the control unit 21, for example, displays information suggesting the user registration on the display unit 24. In addition to the information suggesting the user registration, the control unit 21 may display, for example, information relating to functions of the inhaling device 1 that become enabled when the user registration is completed or a method of performing the user registration. The information relating to the method of performing user registration is, for example, information for registering identity verification information. In addition to the information suggesting the user registration, the control unit 21 may display, for example, information indicating that the setting information of the inhaling device 1 can be displayed when the user registration is completed.

The control unit 21 may display, on the display 24, information indicating that only one of the registration of the inhaling device 1 (so-called device registration) or the registration of the user has not been completed. In addition, the control unit 21 may display, on the display unit 24, information indicating that both the registration of the inhaling device 1 (so-called device registration) and the registration of the user are not completed.

### «Configuration Example of Information Processing Server»

The acquisition unit 311 acquires an inquiry of whether or not the user registration has been completed from the user terminal 2 via the communication unit 33.

The determination unit 313 determines whether or not the user registration of the user has been completed based on the registration code, the device ID, or the user ID included in the inquiry. The determination unit 313 determines whether or not the registration of the inhaling device 1 (so-called device registration) has been completed based on the registration code or the device ID in the user registration information acquired by the acquisition unit 311. In addition, the determination unit 313 may determine whether or not the registration of the user has been completed based on the user ID included in the user registration information acquired by the acquisition unit 311. The determination unit 313 may determine whether or not both the registration of the inhaling device 1 (so-called device registration) and the registration of the user are completed.

In a case where the determination unit 313 determines that the user registration has not been completed, the output unit 315 outputs information indicating that the user registration has not been completed to the user terminal 2. The information indicating that the user registration has not been completed may include information indicating that only one of the registration of the inhaling device 1 (so-called device registration) or the registration of the user has not been completed. The information indicating that the user registration has not been completed may include information indicating that both the registration of the inhaling device 1 (so-called device registration) and the registration of the user are not completed.

According to this example, in a case where the user terminal 2 receives smoking information relating to the inhaling device 1 from the inhaling device 1 of the user who has not completed user registration, a notification suggesting user registration is displayed, and therefore, if the inhaling device 1 for which registration has not been completed is used or the user who has not completed registration uses the inhaling device 1, it is possible to suggest user registration. In addition to suggesting user registration, the user terminal 2 presents, for example, the function of the inhaling device 1 that is enabled when user registration is completed, and therefore, it is possible to present the user with the advantage of user registration.

The present invention is not limited to the above-described embodiments, and can be modified in various manners in practice during implementation without departing from the gist of the invention. Moreover, the embodiments can be suitably combined; in that case, the combined advantages are obtained. Furthermore, the above-described embodiments include various inventions, and various inventions can be extracted by a combination selected from structural elements disclosed herein. For example, if the object of the invention is achieved and the advantages of the invention are attained even after part of the structural elements disclosed in connection with the embodiments are deleted, the structure made up of the resultant structural elements can be extracted as an invention.

### REFERENCE SIGNS LIST

1a-1n: inhaling device, 2a-2n: user terminal, 3: information processing server, 10: information processing system, 21: control unit, 22: storage unit, 23: input unit, 24: display unit, 25: communication unit, 26: detection unit, 31: control unit, 32: storage unit, 33: communication unit, 100A: inhaling device, 100B: inhaling device, 110: power-supply unit, 111A: power supply, 111B: power supply, 112A: sensor unit, 112B: sensor unit, 113A: notification unit, 113B: notification unit, 114A: storage unit, 114B: storage unit, 115A: communication unit, 115B: communication unit, 116A: control unit, 116B: control unit, 120: cartridge, 121A: heating unit, 121B: heating unit, 122: liquid guide unit, 123: liquid storage unit, 124: mouthpiece, 130: flavor-imparting cartridge, 131: flavor source, 140: holding part, 141: internal space, 142: opening, 143: bottom portion, 144: heat-insulating part, 150: stick-shaped base material, 151: base material portion, 152: suction portion, 180: airflow path, 181: air inflow hole, 182: air outflow hole, 190: arrow, 211: first acquisition unit, 212: second acquisition unit, 213: specification unit, 214: enabling unit, 215: first output unit, 216: second output unit, 221: setting information DB, 222: application, 311: acquisition unit, 312: specification unit, 313: determination unit, 314: execution unit, 315: output unit, 321: user information DB, 322: setting information DB, N: network.

## Claims

1. An information processing device comprising:
a storage unit configured to store information for setting of a plurality of types of inhalers;
an acquisition unit configured to acquire identification information of an inhaler from a user terminal connected to the inhaler in response to activation of the inhaler;
a specification unit configured to specify information for setting corresponding to the identification information acquired by the acquisition unit; and
an output unit configured to output the information for setting specified by the specification unit to the user terminal.

2. The information processing device according to claim 1, wherein
the acquisition unit is configured to acquire information used for user registration of a user together with the identification information, and
the output unit is configured to output the information for setting specified by the specification unit to the user terminal according to a user registration state of the user based on the information used for user registration.

3. The information processing device according to claim 2, further comprising:
a determination unit configured to determine whether or not the user registration of the user is completed based on the information used for user registration; and
an execution unit configured to execute the user registration of the user based on the information used for user registration in response to the determination unit determining that the user registration of the user is uncompleted,
wherein the output unit is configured to output the information for setting specified by the specification unit to the user terminal in response to the determination unit determining that the user registration of the user is completed, or in response to the execution unit executing the user registration of the user.

4. The information processing device according to claim 3, wherein
the information used for user registration includes identity verification information of the user, and
the execution unit is configured to execute the user registration of the user based on the identity verification information of the user.

5. An information processing method comprising:
acquiring identification information of an inhaler from a user terminal connected to the inhaler in response to activation of the inhaler;
specifying information for setting corresponding to the acquired identification information based on information for setting of a plurality of types of inhalers stored in a storage unit; and
outputting the specified information for setting to the user terminal.

6. A program for causing a computer to implement:
an acquisition unit configured to acquire identification information of an inhaler from a user terminal connected to the inhaler in response to activation of the inhaler;
a specification unit configured to specify information for setting corresponding to the acquired identification information based on information for setting of a plurality of types of inhalers stored in a storage unit; and
an output unit configured to output the specified information for setting to the user terminal.

7. An information processing system comprising an information processing device and an information processing terminal,
the information processing device comprising:
an acquisition unit configured to acquire information used for user registration of a user from the information processing terminal;
a determination unit configured to determine whether or not the user registration of the user is completed based on the information used for user registration;
an execution unit configured to execute the user registration of the user based on the information used for user registration in response to the determination unit determining that the user registration of the user is uncompleted; and
an output unit configured to output a notification regarding user registration completion of the user to the information processing terminal in response to the determination unit determining that the user registration of the user is completed, or in response to the execution unit executing the user registration of the user,
the information processing terminal comprising:
a storage unit configured to store information for setting of a plurality of types of inhalers;
a first acquisition unit configured to acquire identification information of an inhaler from the inhaler in response to activation of the inhaler;
an output unit configured to output information used for user registration to the information processing device in response to the first acquisition unit acquiring the identification information;
a second acquisition unit configured to acquire the notification from the information processing device;
a specification unit configured to specify information for setting corresponding to the identification information in response to the second acquisition unit acquiring the notification; and
an output unit configured to output the information for setting specified by the specification unit to a display unit.

8. The information processing system according to claim 7, further comprising:
an enabling unit configured to enable display of the information for setting specified by the specification unit based on the notification acquired by the second acquisition unit,
wherein the output unit is configured to output the information for setting specified by the specification unit to the display unit in response to the enabling unit enabling the display of the information for setting specified by the specification unit.

9. The information processing system according to claim 7 or 8, wherein
the information used for user registration includes identity verification information of the user, and
the execution unit is configured to execute the user registration of the user based on the identity verification information of the user.

10. An information processing method in an information processing system comprising an information processing device and an information processing terminal,
the information processing device comprising:
acquiring information used for user registration of a user from the information processing terminal;
determining whether or not the user registration of the user is completed based on the information used for user registration;
executing the user registration of the user based on the information used for user registration in response to determination that the user registration of the user is uncompleted; and
outputting a notification regarding user registration completion of the user to the information processing terminal in response to determination that the user registration of the user is completed, or in response to execution of the user registration of the user,
the information processing terminal comprising:
acquiring identification information of an inhaler from the inhaler in response to activation of the inhaler;
outputting information used for user registration to the information processing device in response to acquisition of the identification information;
acquiring the notification from the information processing device;
specifying information for setting corresponding to the identification information in response to acquisition of the notification based on information for setting of a plurality of types of inhalers stored in a storage unit; and
outputting the specified information for setting to a display unit.

11. A program for causing a computer to implement:
a first acquisition unit configured to acquire identification information of an inhaler from the inhaler in response to activation of the inhaler;
an output unit configured to output information used for user registration of a user to an information processing device in response to acquisition of the identification information;
a second acquisition unit configured to acquire, from the information processing device, a notification regarding user registration completion of the user based on the information used for user registration;
a specification unit configured to specify information for setting corresponding to the identification information in response to the second acquisition unit acquiring the notification, based on information for setting of a plurality of types of inhalers stored in a storage unit; and
an output unit configured to output the information for setting specified by the specification unit to a display unit.

12. The program according to claim 11, further causing the computer to implement:
an enabling unit configured to enable output of the information for setting specified by the specification unit based on the notification acquired by the second acquisition unit,
wherein the output unit is configured to output the information for setting specified by the specification unit to the display unit in response to the enabling unit enabling display of the information for setting specified by the specification unit.
